# EUROPÄISCHE PATENTSCHRIFT

(11) **EP 3 230 599 B1**
(45) Veröffentlichungstag und Bekanntmachung des Hinweises auf die Patenterteilung: **06.01.2021**
(21) Anmeldenummer: 15801680.8
(22) Anmeldetag: 26.11.2015
(51) Int. Cl.: F15B 11/036, F15B 15/14, F16H 61/30

(54) **LINEARANTRIEB ZUR BEWEGUNG EINES SCHALTHEBELS IN EINEM GETRIEBE UND VERFAHREN ZUM BETÄTIGEN DESSEN**
LINEAR DRIVE FOR MOVING A GEARSHIFT LEVER IN A TRANSMISSION AND METHOD OF OPERATING SAME
DISPOSITIF D'ENTRAÎNEMENT LINÉAIRE POUR DÉPLACER UN LEVIER DE COMMUTATION DANS UNE TRANSMISSION ET PROCÉDÉ D'EMPLOY DE CE DERNIER

(30) Priorität: 13.12.2014 DE 102014018646
(43) Veröffentlichungstag der Anmeldung: 18.10.2017
(73) Patentinhaber: WABCO GmbH, 30453 Hannover (DE)
(72) Erfinder: HEURICH, Mike, 31552 Apelern (DE); HÖLSCHER, Reiner, 30926 Seelze (DE); KLIK, Stefan, 30459 Hannover (DE)
(74) Vertreter: Lauerwald, Jörg
(86) Internationale Anmeldenummer: PCT/EP2015/002373
(87) Internationale Veröffentlichungsnummer: WO 2016/091358

(56) Entgegenhaltungen:
- WO-A1-95/24544
- DE-A1- 4 404 472
- DE-A1-102010 022 747
- DE-A1-102011 078 820
- GB-A- 654 191
- JP-A- S60 179 501
- US-A- 4 765 225
- US-A1- 2007 221 054

## Beschreibung

Die Erfindung betrifft einen Linearantrieb für ein automatisiertes Schaltgetriebe eines Kraftfahrzeugs mit Verbrennungsmotor zur Bewegung eines Schalthebels in dem Schaltgetriebe, gemäß dem Oberbegriff des Anspruchs 1.

Linearantriebe der genannten Art können in verschiedenen Vorrichtungen und Systemen eingesetzt werden, etwa in Verbindung mit pneumatischen oder hydraulischen Getriebeschaltungen, pneumatischen oder hydraulischen Kupplungen, in mechatronischen Geräten, in pneumatischen oder hydraulischen Systemen, als pneumatische oder hydraulische Aktuatoren. Eine wichtige Anwendung - wie in der vorliegenden Erfindung erläutert wird - ist die Bewegung eines Schalthebels in einem automatisierten Getriebe.

Ein Schaltgetriebe für ein Kraftfahrzeug mit Verbrennungsmotor ist mit einer Zusatzeinrichtung für die Automatisierung der Schaltbewegungen versehen. Die Zusatzeinrichtung beinhaltet einen Linearantrieb mit in Längsrichtung verschiebbarer Druckstange, welche an einem Ende einen doppelseitig wirkenden Zylinder aufweist, einen sogenannten Zwei- oder Mehrstellungszylinder. Der zugehörige Kolben wird von einem Fluid beaufschlagt, welches zu diesem Zweck und je nach beabsichtigter Bewegungsrichtung in einen von zwei Arbeitsräumen einströmt. Die Druckstange weist außerhalb des Mehrstellungszylinders eine Schnittstelle zur Übertragung der Bewegung/Kraft auf den Schalthebel auf, etwa eine Vertiefung oder Ausnehmung zur Mitnahme des Schalthebels.

Die Beaufschlagung des Kolbens durch das Fluid wird durch Öffnen von Ventilen in entsprechenden Leitungen ausgelöst. Der apparative Aufwand soll aus Kostengründen möglichst gering sein. Am Einfachsten ist deshalb eine Ansteuerung der Ventile derart, dass diese entweder offen oder geschlossen sind.

Bei einem derartigen Betrieb fährt die Druckstange ohne Dämpfung und mit hoher Geschwindigkeit hin und her. Typischerweise wird die Bewegung der Druckstange nur durch Anschlag derselben oder des Kolbens im Mehrstellungszylinder gestoppt. Die betroffenen Bauteile werden dadurch hoch beansprucht. Gerade in einem Getriebe ist eine sanfte Bewegung, nämlich ein stufenweises und/oder kontinuierliches aneinander Herantasten sinnvoll, um das Ineinandergreifen der beteiligten Zahnräder schonend zu ermöglichen (Synchronisierungsfunktion).

Eine Aufgabe der vorliegenden Erfindung ist die Schaffung eines Linearantriebs, mit dem ein gedämpfter Bewegungsablauf möglich ist. Weitere Aufgaben sind vorzugsweise ein diskontinuierlicher Bewegungsverlauf der Druckstange, ein nichtlinearer Kraft-Weg-Verlauf, eine einfache Ansteuerung der verschiedenen Positionen ohne Anschläge, Rastungen und Schleppkolben, eine Minderbelastung der Bauelemente, redundante Sicherheitsfunktionen durch Trennung zwischen Krafteinleitung und Regeleinheit, eine mögliche Verriegelung der Positionen und/oder die Ansteuerung des Linearantriebs in einem Synchron-Getriebe mit möglichst wenig Magnetventilen.

Erfindungsgemäß wird die Aufgabe durch die Merkmale des Anspruchs 1 gelöst. Die Druckstange weist einen zweiten Kolben auf, welcher in einem Druckraum bewegbar ist. Dabei ist der Druckraum mit einem inkompressiblen Medium gefüllt und weist eine Öffnung zum Eintritt und Austritt des inkompressiblen Mediums auf. Insbesondere ist der Querschnitt der Öffnung kleiner als der wirksame Querschnitt des Druckraums. Durch die Strömung des inkompressiblen Mediums durch die Öffnung ergibt sich ein Dämpfungseffekt. Zusätzlich zu der genannten Öffnung können weitere Öffnungen vorgesehen sein, auch derart, dass eine Öffnung zum Eintritt und eine Öffnung zum Austritt des inkompressiblen Mediums vorgesehen ist. Durch den zweiten Kolben mit Druckraum ist eine funktionelle Trennung zwischen der Krafteinleitung (in den Arbeitsraum) einerseits und der Dämpfung (Druckraum) andererseits gegeben. Beide Aufgaben können mit insgesamt drei Magnetventilen erfüllt werden.

US 4765225 offenbart einen Aktuator, welcher mit einem pneumatischen und einem hydraulischen Zylinder ausgebildet ist. Jede der pneumatischen und hydraulischen Zylinder umfasst einen individuellen Kolben. Die zwei Kolben von dem genannten Zylinder sind mit einer gemeinsamen Verbindungsstange verbunden.

DE 10 2010 022747 A1 offenbart eine Einrichtung mit einem pneumatischen Stellzylinder, die wenigstens einen Pneumatikkolben aufweist, wobei die Einrichtung ein willkürlich betätigbares Bremselement aufweist, das mit dem Pneumatikkolben oder einem mittels des Pneumatikkolbens bewegbaren Bauteil verbunden ist, wobei eine Bewegung des Pneumatikkolbens durch Betätigung des Bremselements bremsbar oder unterdrückbar ist.

WO 95/24544 A1 bezieht sich auf einen pneumatischen Hochgeschwindigkeitsaktuator und insbesondere auf ein elektrohydraulisch / pneumatisches Verfahren zum Steuern pneumatischer Servoaktuatoren zur Verwendung in Steuerungsanwendungen wie Robotik.

Erfindungsgemäß ist der Öffnung oder einer anschließenden Leitung ein elektrisch ansteuerbares Ventil zugeordnet, etwa ein Magnetventil. Vorzugsweise handelt es sich um ein 2-Wege-Ventil, welches insbesondere taktweise ansteuerbar ist. Über das Ventil sind der Volumenstrom des inkompressiblen Mediums und damit zugleich die Bewegung der Druckstange regelbar.

Vorteilhafterweise sind Mittel zur direkten oder indirekten Bestimmung der Position der Druckstange vorgesehen. Dadurch ist eine Regelung des Linearantriebs realisierbar.

Es kann einer an die Offnung anschließenden Leitung ein Durchflussmesser zugeordnet sein. Eine Änderung der Position der Druckstange ist so durch Messung des Volumenstroms bestimmbar. Der Durchflussmesser ist in diesem Fall das Mittel zur indirekten Positionsbestimmung.

Zusätzlich oder alternativ kann der Druckstange oder einem damit verbundenen Bauteil ein Sensor zur Positionsbestimmung zugeordnet sein. Der Sensor ist in diesem Fall das Mittel zur Positionsbestimmung. Vorzugsweise ist in einem die Druckstange aufnehmenden Gehäuse ein Sensor vorgesehen.

Vorteilhafterweise handelt es sich bei dem Sensor um einen induktiv bzw. magnetisch wirkenden Sensor. Dieser kann beispielsweise ein PLCD (Permanentmagnetic Linear Contactless Displacement) -Sensor sein, welcher die Position eines Bauteils mit magnetischen Eigenschaften detektiert.

Es kann der zweite Kolben ein Ende der Druckstange sein. Vorzugsweise ist der erste Kolben am anderen Ende der Druckstange vorgesehen.

Alternativ kann der zweite Kolben ein mit der Druckstange verbundener Kolben sein, insbesondere eine Stange. Der zweite Kolben schließt vorzugsweise in axialer Richtung an die Druckstange an bzw. fluchtet mit dieser.

Gemäß der Erfindung sind der zweite Kolben und der Druckraum Teile einer externen Einheit, welche mit einem Gehäuse für die Druckstange verbunden ist. Die externe Einheit kann dadurch als Nachrüstlösung für vorhandene Linearantriebe eingesetzt werden.

Erfindungsgemäß kann der Öffnung eine Leitung zugeordnet sein, wobei die Leitung mit einem Vorrat für das inkompressible Medium verbunden ist. Es handelt sich dabei vorzugsweise um einen offenen bzw. drucklosen Vorrat, so dass bei einer Volumenänderung im Vorrat kein Überdruck oder Unterdruck auftreten können.

Alternativ kann ein geschlossenes System vorgesehen sein. Hierzu sind der Druckstange ein dritter Kolben und ein weiterer Druckraum mit inkompressiblem Medium zugeordnet, wobei der dritte Kolben im weiteren Druckraum dem zweiten Kolben entgegenwirkt, und wobei der weitere Druckraum mit dem Druckraum des zweiten Kolbens über eine Leitung in Verbindung steht. Das inkompressible Medium fließt bei Bewegung der Druckstange zwischen den beiden Druckräumen hin und her. Ein zusätzlicher Vorrat wird nicht benötigt. Auch hier können Mittel zur direkten oder indirekten Bestimmung der Position der Druckstange vorgesehen sein.

Nach einem weiteren Gedanken der Erfindung sind die Druckräume und zweiter und dritter Kolben Teil einer externen Einheit, welche mit einem Gehäuse für die Druckstange verbunden ist. Die externe Einheit kann als Nachrüstlösung einem Linearantrieb hinzugefügt werden.

Weiterhin Gegenstand der Erfindung ist ein Verfahren zum Betätigen eines erfindungsgemäßen Linearantriebs mit einem insbesondere elektrisch ansteuerbaren Ventil für die Öffnung oder für eine an die Öffnung anschließende Leitung. Zum Betätigen des Linearantriebs wird der Arbeitsraum mit Druck beaufschlagt, während das der Leitung oder der Öffnung des Druckraumes zugeordnete Ventil geschlossen ist. Erst danach wird das Ventil angesteuert, um das inkompressible Medium in den Druckraum oder aus dem Druckraum strömen zu lassen und so die Bewegung der Druckstange zu steuern. Die Bewegung der Druckstange ist damit unabhängig vom Aufbau des Druckes im Arbeitsraum.

Ein weiteres erfindungsgemäßes Verfahren zum Betätigen des Linearantriebs sieht vor, dass das der Öffnung des Druckraumes oder der anschließenden Leitung zugeordnete Ventil bei Nicht-Betätigung des Linearantriebs geschlossen ist und so den Linearantrieb verriegelt. Unbeabsichtigte oder undefinierte Positionen des Linearantriebs werden dadurch vermieden.

Die Beaufschlagung des Arbeitsraumes mit dem ersten Kolben und somit die Bewegung der Druckstange erfolgen vorzugsweise pneumatisch. Daraus ergibt sich auch eine bevorzugte Anwendung des Linearantriebs, nämlich in Verbindung mit automatisierten Schaltgetrieben für Nutzfahrzeuge mit pneumatischem System, insbesondere für die Betätigung von Druckluftbremsen.

Weitere Merkmale der Erfindung ergeben sich aus der Beschreibung im Übrigen und aus den Ansprüchen. Vorteilhafte Ausführungsbeispiele der Erfindung werden nachfolgend anhand von Zeichnungen näher erläutert. Es zeigen:
- Fig. 1: einen Linearantrieb, der nicht ein Teil der vorliegenden Erfindung ist, mit Druckstange und Gehäuse im teilweisen und stark vereinfachten Längsschnitt, nämlich eine sogenannte interne Ausführung mit Vorrat,
- Fig. 2: einen Linearantrieb analog Fig. 1 mit Vorrat, jedoch mit externer Einheit gemäß einer Ausführungsform der Erfindung,
- Fig. 3: einen Linearantrieb, der nicht ein Teil der vorliegenden Erfindung ist, als interne Ausführung, ähnlich Fig. 1, jedoch als geschlossenes System ohne Vorrat,
- Fig. 4: einen Linearantrieb analog Fig. 3 als geschlossene Ausführung ohne Vorrat, jedoch mit externer Einheit gemäß einer Ausführungsform der Erfindung.

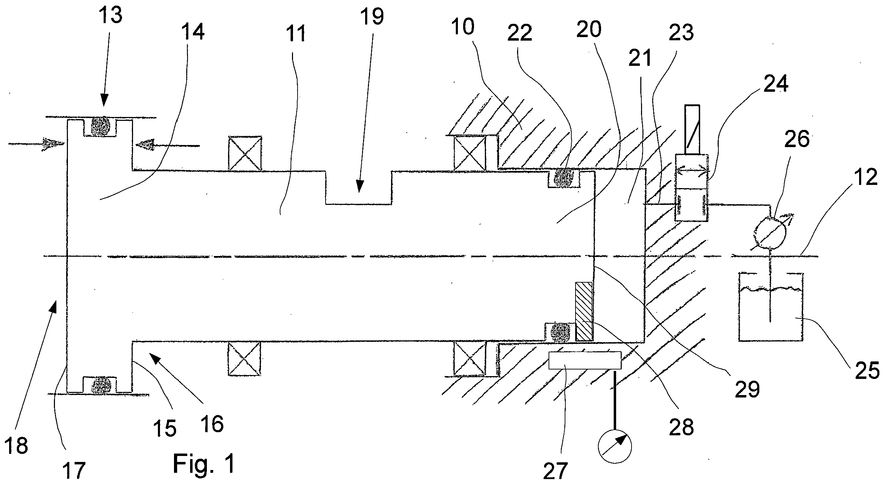

In einem Gehäuse 10 ist eine Druckstange 11 entlang einer Längsachse 12 verschiebbar gelagert. An einem Ende - in Fig. 1 links - weist die Druckstange 11 einen in einem Zylinder 13 geführten Kolben 14 auf. Kolben 14 und Zylinder 13 sind hier geteilt ausgeführt, mit einer ersten, ringförmigen Kolbenoberfläche 15 in einem ersten Zylinder-Arbeitsraum 16 und einer zweiten, vollkreisförmigen Kolbenoberfläche 17 in einem zweiten Zylinder-Arbeitsraum 18. Die beiden Arbeitsräume 16, 18 sind über nicht gezeigte Anschlüsse und Leitungen mit einem Arbeitsfluid ansteuerbar, so dass die Druckstange 11 im Gehäuse 10 in Richtung der Längsachse 12 bewegt wird.

Kolben 14 und Zylinder 13 sind vorzugsweise nach dem bekannten Prinzip eines Mehrstellungszylinders mit Schleppkolben ausgebildet, was aber im Rahmen der Erfindung von untergeordneter Bedeutung ist und nicht im Detail erläutert werden muss. Bei "Belüftung" des Arbeitsraumes 18 und "Entlüftung" des Arbeitsraumes 16 wird die Druckstange 11 nach rechts bewegt und umgekehrt. Bei Belüftung beider Arbeitsräume 16, 18 mit gleichem Druck kehrt der Kolben 14 in die in den Fig. gezeigte Mittelstellung zurück. Die wirksamen Kolbenoberflächen 15, 17 sind dann gleich groß.

Etwa mittig weist die Druckstange 11 seitlich eine Ausnehmung 19 als Schnittstelle für eine Kraftübertragung zu einem Schaltgetriebe auf. Beispielsweise kann in die Ausnehmung 19 ein Gelenkkopf eingesetzt sein, an dem eine Schaltstange des Schaltgetriebes ansetzt. Durch die Bewegung der Druckstange 11 wird die Schaltstange hin- und herbewegt.

Am anderen Ende der Druckstange 11 - in Fig. 1 rechts - taucht als zweiter Kolben ein Kopf 20 der Druckstange 11 in einen Druckraum 21 ein. Druckraum 21 oder Kopf 20 sind mit einer umlaufenden Dichtung 22 versehen. Je nach Stellung der Druckstange 11 nimmt der Kopf 20 einen größeren oder kleineren Teil des Volumens des Druckraums 21 ein.

An den Druckraum 21 schließt eine Leitung 23 mit einem Ventil 24 an. Vorzugsweise handelt es sich um ein einfaches 2-Wege-Magnetventil, welches entweder offen oder geschlossen ist, wie in Fig. 1 dargestellt. Im Anschluss an das Ventil 24 setzt sich die Leitung 23 fort bis in einen Vorrat 25 mit einer inkompressiblen Flüssigkeit. Aus dem Vorrat kann die Änderung im freien Volumen des Druckraumes 21 ausgeglichen werden. Außerdem schafft der Vorrat einen Ausgleich gegen Ausdehnung oder Verlust der Flüssigkeit.

In der Leitung 23, insbesondere zwischen Ventil 24 und Vorrat 25, ist ein Volumenstrom-Detektor 26 vorgesehen. Da die Flüssigkeit im Vorrat 25, in der Leitung 23 und im Druckraum 21 inkompressibel ist, lässt sich aus dem detektierten Volumenstrom eine quantitative Wegänderung der Druckstange 11 ableiten.

Vorgesehen ist eine Regelung des Ventils 24 zur Beeinflussung der Bewegung der Druckstange 11 nach Beaufschlagung des Kolbens 14. Konkret wird von einem geschlossenen Ventil 24 ausgegangen, siehe Fig. 1. Zur Verstellung der Druckstange 11 wird dann der Kolben 14 in der einen oder anderen Richtung beaufschlagt, so dass eine Verstellkraft anliegt. Anschließend wird das Ventil 24 im Rahmen einer Steuerung oder Regelung zeitweise bzw. taktweise geöffnet, um ein Umströmen der inkompressiblen Flüssigkeit vom Druckraum 21 zum Vorrat 25 bzw. in Gegenrichtung zu ermöglichen. Dabei wird der Volumenstrom durch den Detektor 26 erfasst und in die Steuerung/Regelung als Information eingespeist. Dadurch ist es beispielsweise möglich, die Druckstange 11 am Ende einer Bewegung langsamer zu verfahren als im Durchschnitt der Bewegung.

Zusätzlich zum Detektor 26 oder alternativ kann ein magnetisch arbeitender Sensor 27 seitlich am Druckraum 21 angeordnet sein. Der Sensor 27 tastet die Position eines Permanentmagneten 28 am Kopf 20 ab. Der Permanentmagnet 28 ist in Fig. 1 nahe einer Kopfoberfläche 29 nur angedeutet.

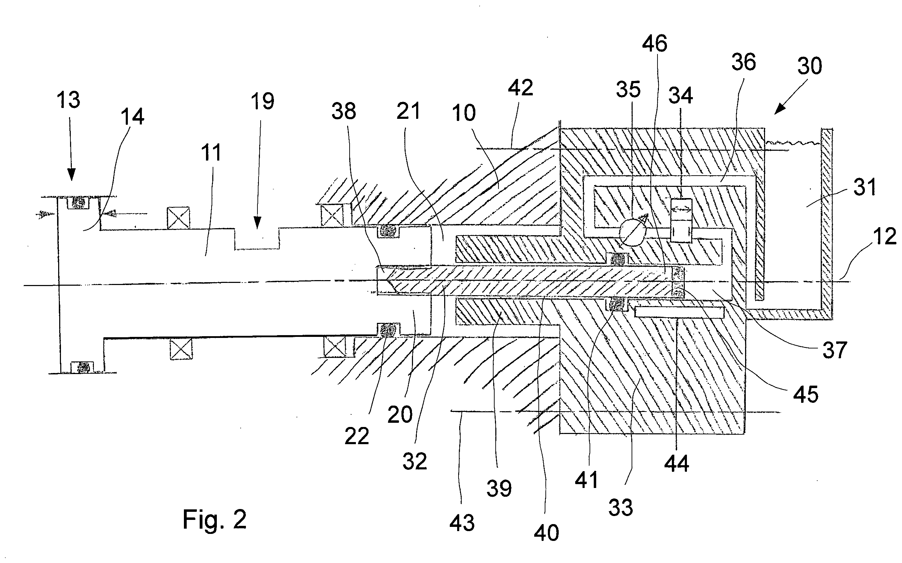

Während Fig. 1 eine in das Gehäuse 10 integrierte (interne) Regeleinheit mit Kopf 20, Druckraum 21 und weiteren Komponenten enthält, zeigt Fig. 2 eine externe Regeleinheit 30 außerhalb des Gehäuses 10, mit einem Vorrat 31 für die inkompressible Flüssigkeit. Weitere wesentliche Bestandteile der externen Regeleinheit 30 sind ein stangenartiger Kolben 32 in einem Zusatzgehäuse 33, ein Ventil 34 nach Art eines 2-Wege-Magnetventils, ein Volumenstrom-Detektor 35 und eine Leitung 36 vom Vorrat 31 über Detektor 35 und Ventil 34 zu einem Druckraum 37.

Der Kolben 32 ist entlang der Längsachse 12 angeordnet und fest mit der Druckstange 11 verbunden. Gemäß Fig. 2 ist der Kolben 32 in eine Bohrung 38 im Kopf 20 eingedreht.

In ähnlicher Weise ist das Zusatzgehäuse 33 mit einem Fortsatz 39 in den Druckraum 21 eingesetzt. Der Druckraum 21 kann hier drucklos sein bzw. eine stets offene Verbindung zur Atmosphäre aufweisen, da er durch den Druckraum 37 ersetzt ist.

Der Kolben 32 ist im Zusatzgehäuse 33 verschiebbar gelagert, nämlich in einer Röhre 40, welche den Druckraum 37 in Richtung auf die Druckstange 11 fortsetzt. Im Bereich der Röhre 40 ist zwischen Kolben 32 und Zusatzgehäuse 33 eine umlaufende Dichtung 41 vorgesehen. Zusatzgehäuse 33 und Gehäuse 10 sind fest miteinander verschraubt. Fig. 2 zeigt nur Längsachsen 42, 43 entsprechender Verschraubungen.

Bei jeder Verschiebung der Druckstange 11 wird der Kolben 32 mit bewegt und ändert so das Volumen im Druckraum 37. Entsprechend strömt bei geöffnetem Ventil 34 Flüssigkeit entlang der Leitung 36 aus dem Vorrat 31 oder in diesen hinein.

Zusätzlich oder alternativ zum Volumenstrom-Detektor 35 kann auch hier ein magnetisch wirkender Sensor 44 vorgesehen sein, der mit einem Permanentmagneten 45 an einem Kopf 46 des Kolbens 31 zusammenwirkt.

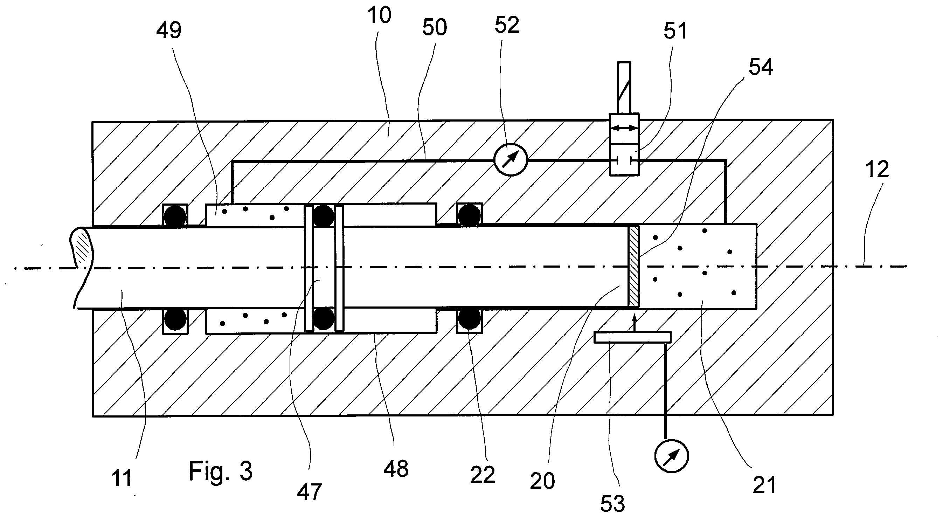

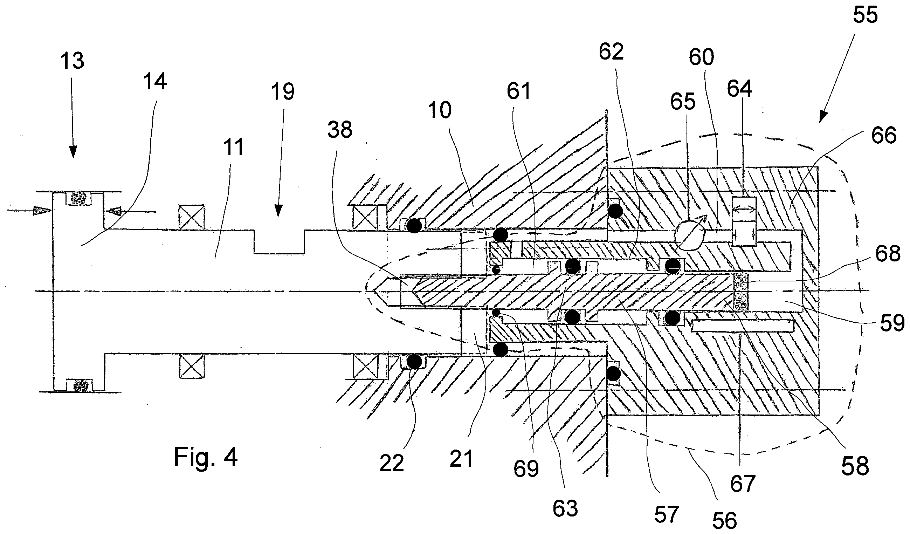

Ein etwas anderes Prinzip für die Realisierung der Regelung zeigen die Fig. 3 und 4. Die inkompressible Flüssigkeit wird nicht einem zusätzlichen Vorrat entnommen bzw. dort eingespeist, sondern zwischen zwei Kolben-Zylinder-Einheiten hin- und herbewegt. Es handelt sich um ein geschlossenes System. Zur Vereinfachung ist in Fig. 3 die Druckstange 11 ohne die in den Fig. 1 und 2 gezeichneten Zylinder 13 und Kolben 14 gezeigt. Dargestellt ist eine interne Regeleinheit im Gehäuse 10.

Am rechten Ende der Druckstange 11 ist wie in Fig. 1 eine Kolben-Zylinder-Einheit bestehend aus Kopf 20 und Druckraum 21 gebildet. Links davon, also in Richtung auf die in Fig. 3 nicht gezeigte Ausnehmung (Ziffer 19 in Fig. 1), ist die Druckstange 11 mit einer Erweiterung 47 zur Bildung eines Kolbens versehen, wobei dieser Kolben in einem zylindrischen Raum 48 hin- und herbewegbar ist. Zusätzlich zum in Fig. 3 nicht gezeigten ersten Kolben 14 stellt der Kopf 20 den zweiten Kolben und die Erweiterung 47 den dritten Kolben dar.

Ein Teil des zylindrischen Raumes 48 ist als weiterer Druckraum 49 vorgesehen. Letzterer ist über eine Leitung 50 mit dem Druckraum 21 verbunden. Der Querschnitt des Druckraums 21 einerseits und der Querschnitt des Druckraums 49 mit dem Querschnitt der Druckstange 11 andererseits sind so aufeinander abgestimmt, dass in Richtung der Längsachse 12 gleiche Querschnittsflächen wirksam sind. Dadurch ist gewährleistet, dass die Summe der Volumina der Druckräume 21, 49 beim Umströmen der Flüssigkeit über die Leitung 50 gleich bleibt.

In der Leitung 50 sind ein Ventil 51 (2-Wege-Magnetventil) und ein Volumenstrom-Detektor 52 angeordnet. Alternativ oder zusätzlich zum Detektor 52 kann auch hier ein magnetisch wirksamer Sensor 53 im Gehäuse 10 und ein Permanentmagnet 54 am Kopf 20 vorgesehen sein.

Fig. 4 zeigt ebenso wie Fig. 3 ein geschlossenes System, ohne Vorrat, jedoch mit externer Einheit 55 ähnlich Fig. 2. Durch das geschlossene System ist der Aufbau der externen Einheit 55 etwas aufwendiger als bei dem offenen System der Fig. 2. Die externe Einheit 55 ist in Fig. 4 durch eine gestrichelte Linie 56 umschlossen. Die externe Einheit 55 weist einen stangenartigen Kolben 57 mit Kopf 58 auf, einen Druckraum 59, eine hieran anschließende Leitung 60, einen weiteren Druckraum 61 in einem zylindrischen Raum 62 und eine Erweiterung 63 auf dem Kolben 57. Die Erweiterung 63 bildet eine Querschnittsvergrößerung des Kolbens 57 im zylindrischen Raum 62 und wirkt als zusätzlicher Kolben (als dritter Kolben) zum weiteren Druckraum 61. Letzterer ist über die Leitung 60 mit dem Druckraum 59 verbunden und so bemessen, dass beim Überströmen der inkompressiblen Flüssigkeit die Summe der Volumina der Druckräume gleich bleibt.

In der Leitung 60 sind in der zuvor beschriebenen Weise ein Ventil 64 und ein Detektor 65 (zur Bestimmung des Volumenstroms) angeordnet. Alternativ oder zusätzlich zum Detektor 65 kann wiederum im Zusatzgehäuse 66 der externen Einheit 55 ein magnetisch wirksamer Sensor 67 vorgesehen sein, welcher mit einem Permanentmagneten 68 am Kopf 58 zusammenwirkt.

Der weitere Druckraum 61 ist durch eine umlaufende Dichtung 69 am Kolben 57 zum hier drucklosen Druckraum 21 abgedichtet. Weitere Dichtungen sind zum Trennen der unterschiedliche Drücke aufweisenden Volumina vorgesehen.

**Bezugszeichenliste (Bestandteil der Beschreibung)**

| | | | |
|---|---|---|---|
| 10 | Gehäuse | 42 | Längsachse |
| 11 | Druckstange | 43 | Längsachse |
| 12 | Längsachse | 44 | Sensor |
| 13 | Zylinder | 45 | Permanentmagnet |
| 14 | Kolben | 46 | Kopf |
| 15 | Kolbenoberfläche (ringförmig) | 47 | Erweiterung |
| 16 | Arbeitsraum | 48 | zylindrischer Raum |
| 17 | Kolbenoberfläche (vollkreisförmig) | 49 | weiterer Druckraum |
| 18 | Arbeitsraum | 50 | Leitung |
| 19 | Ausnehmung | 51 | Ventil |
| 20 | Kopf | 52 | Volumenstrom-Detektor |
| 21 | Druckraum | 53 | Sensor |
| 22 | Dichtung | 54 | Permanentmagnet |
| 23 | Leitung | 55 | externe Einheit |
| 24 | Ventil | 56 | gestrichelte Linie |
| 25 | Vorrat | 57 | Kolben |
| 26 | Volumenstrom-Detektor | 58 | Kopf |
| 27 | Sensor | 59 | Druckraum |
| 28 | Permanentmagnet | 60 | Leitung |
| 29 | Kopfoberfläche | 61 | weiterer Druckraum |
| 30 | externe Regeleinheit | 62 | zylindrischer Raum |
| 31 | Vorrat | 63 | Erweiterung |
| 32 | Kolben | 64 | Ventil |
| 33 | Zusatzgehäuse | 65 | Detektor |
| 34 | Ventil | 66 | Zusatzgehäuse |
| 35 | Volumenstrom-Detektor | 67 | Sensor |
| 36 | Leitung | 68 | Permanentmagnet |
| 37 | Druckraum | 69 | Dichtung |
| 38 | Bohrung | | |
| 39 | Fortsatz | | |
| 40 | Röhre | | |
| 41 | Dichtung | | |

## Patentansprüche

1. Linearantrieb für ein automatisiertes Schaltgetriebe eines Kraftfahrzeugs mit Verbrennungsmotor zur Bewegung eines Schalthebels in dem Schaltgetriebe, mit einer pneumatisch oder hydraulisch in einem Gehäuse (10) bewegbaren Druckstange (11), wobei der Druckstange (11) ein erster Kolben (14) mit wenigstens einem pneumatisch oder hydraulisch beaufschlagbaren Arbeitsraum (16) zugeordnet ist, wobei die Druckstange (11) einen zweiten Kolben (32, 57) aufweist, welcher in einem Druckraum (37,59) bewegbar ist, wobei der Druckraum (37,59) mit einem inkompressiblen Medium gefüllt ist und eine Öffnung zum Eintritt und Austritt des inkompressiblen Mediums aufweist, wobei der Öffnung oder einer anschließenden Leitung (36, 60) ein elektrisch ansteuerbares Ventil (34, 64) zugeordnet ist, wobei der zweite Kolben (32, 57) und der Druckraum (37, 59) Teil einer ein Zusatzgehäuse (33, 66) aufweisenden externen Einheit (30, 55) sind, wobei das Zusatzgehäuse (33,66) mit dem Gehäuse (10) für die Druckstange (11) verbunden ist,
wobei die Druckstange (11) etwa mittig seitlich eine Ausnehmung (19) als Schnittstelle für eine Kraftübertragung zu dem Schaltgetriebe aufweist.

2. Linearantrieb nach Anspruch 1, **gekennzeichnet durch** Mittel zur direkten oder indirekten Bestimmung der Position der Druckstange (11).

3. Linearantrieb nach Anspruch 1 oder 2, **dadurch gekennzeichnet, dass** der Öffnung eine Leitung (36, 60) zugeordnet ist und dass der Leitung ein Durchflussmesser (35, 65) zugeordnet ist.

4. Linearantrieb nach Anspruch 3, **dadurch gekennzeichnet, dass** der Durchflussmesser (35, 65) das Mittel zur indirekten Bestimmung der Position der Druckstange (11) ist.

5. Linearantrieb nach Anspruch 1 oder einem der weiteren Ansprüche, **dadurch gekennzeichnet, dass** der Druckstange (11) oder einem damit verbundenen Bauteil ein Sensor zur Positionsbestimmung zugeordnet ist.

6. Linearantrieb nach Anspruch 5, **dadurch gekennzeichnet, dass** der Sensor ein induktiv/magnetisch wirkender Sensor (44, 67) ist.

7. Linearantrieb nach Anspruch 1 oder einem der weiteren Ansprüche, **dadurch gekennzeichnet, dass** der zweite Kolben ein mit der Druckstange (11) verbundener Kolben (32, 57) ist, insbesondere eine Stange.

8. Linearantrieb nach Anspruch 1 oder einem der weiteren Ansprüche, **dadurch gekennzeichnet, dass** der Öffnung eine Leitung (36) zugeordnet ist, wobei die Leitung mit einem Vorrat (31) für das inkompressible Medium verbunden ist.

9. Linearantrieb nach Anspruch 1 oder einem der weiteren Ansprüche, **dadurch gekennzeichnet, dass** der Druckstange (11) ein dritter Kolben (Erweiterung 63) und ein weiterer Druckraum (61) mit inkompressiblem Medium zugeordnet sind, wobei der dritte Kolben (Erweiterung 63) im weiteren Druckraum (61) dem zweiten Kolben entgegenwirkt, und wobei der weitere Druckraum (61) mit dem Druckraum (59) des zweiten Kolbens über eine Leitung (60) in Verbindung steht.

10. Linearantrieb nach Anspruch 9, **dadurch gekennzeichnet, dass** die Druckräume (59, 61) und zweiter und dritter Kolben Teil einer externen Einheit (55) sind, welche mit einem Gehäuse (10) für die Druckstange (11) verbunden ist.

11. Verfahren zum Betätigen eines Linearantriebs nach einem der voranstehenden Ansprüche 1 bis 10, **dadurch gekennzeichnet, dass** der Arbeitsraum (37) mit Druck beaufschlagt wird, während das der Leitung (36, 60) oder der Öffnung des Druckraumes (37, 59) zugeordnete Ventil (34, 64) geschlossen ist, und dass erst danach das Ventil (34, 64) angesteuert wird, um das inkompressible Medium in den Druckraum oder aus dem Druckraum strömen zu lassen und so die Bewegung der Druckstange (11) zu steuern.

12. Verfahren zum Betätigen eines Linearantriebs nach einem der voranstehenden Ansprüche 1 bis 10, **dadurch gekennzeichnet, dass** das der Öffnung des Druckraumes (37, 59) oder der anschließenden Leitung (36, 60) zugeordnete Ventil (34, 64) bei Nicht-Betätigung des Linearantriebs geschlossen ist und so den Linearantrieb verriegelt.

## Claims

1. Linear drive for an automated manual transmission of a motor vehicle with an internal combustion engine, for moving a gearshift lever in the manual transmission, with a pushrod (11), which can be moved pneumatically or hydraulically in a housing (10), wherein the pushrod (11) is assigned a first piston (14) with at least one working chamber (16) to which pneumatic or hydraulic pressure can be applied, wherein the pushrod (11) has a second piston (32, 57), which can be moved in a pressure chamber (37, 59), wherein the pressure chamber (37, 59) is filled with an incompressible medium and has an opening for the incompressible medium to enter and leave, wherein the opening or an adjoining line (36, 60) is assigned an electrically activatable valve (34, 64), wherein the second piston (32, 57) and the pressure chamber (37, 59) are part of an external unit (30, 55) having an additional housing (33, 66), wherein the additional housing (33, 66) is connected to the housing (10) for the pushrod (11), wherein the pushrod (11) has approximately centrally on the side a recess (19) as an interface for power transmission to the manual transmission.

2. Linear drive according to Claim 1, **characterized by** means for directly or indirectly determining the position of the pushrod (11).

3. Linear drive according to Claim 1 or 2, **characterized in that** the opening is assigned a line (36, 60) and **in that** the line is assigned a flow meter (35, 65) .

4. Linear drive according to Claim 3, **characterized in that** the flow meter (35, 65) is the means for indirectly determining the position of the pushrod (11).

5. Linear drive according to Claim 1 or one of the further claims, **characterized in that** the pushrod (11) or a component connected thereto is assigned a sensor for the positional determination.

6. Linear drive according to Claim 5, **characterized in that** the sensor is an inductively/magnetically acting sensor (44, 67).

7. Linear drive according to Claim 1 or one of the further claims, **characterized in that** the second piston is a piston (32, 57), in particular a rod, connected to the pushrod (11).

8. Linear drive according to Claim 1 or one of the further claims, **characterized in that** the opening is assigned a line (36), wherein the line is connected to a store (31) for the incompressible medium.

9. Linear drive according to Claim 1 or one of the further claims, **characterized in that** the pushrod (11) is assigned a third piston (extension 63) and a further pressure chamber (61) with incompressible medium, wherein the third piston (extension 63) in the further pressure chamber (61) acts counter to the second piston, and wherein the further pressure chamber (61) is in connection with the pressure chamber (59) of the second piston by way of a line (60).

10. Linear drive according to Claim 9, **characterized in that** the pressure chambers (59, 61) and the second and third pistons are part of an external unit (55), which is connected to a housing (10) for the pushrod (11).

11. Method for actuating a linear drive according to one of the preceding Claims 1 to 10, **characterized in that** pressure is applied to the working chamber (37), while the valve (34, 64) assigned to the line (36, 60) or the opening of the pressure chamber (37, 59) is closed, and **in that** only thereafter is the valve (34, 64) activated in order to allow the incompressible medium to flow into the pressure chamber or out of the pressure chamber, and thus control the movement of the pushrod (11).

12. Method for actuating a linear drive according to one of the preceding Claims 1 to 10, **characterized in that**, when the linear drive is not actuated, the valve (34, 64) assigned to the opening of the pressure chamber (37, 59) or the adjoining line (36, 60) is closed, and thus locks the linear drive.

## Revendications

1. Dispositif d'entraînement linéaire pour une boîte de vitesses automatisée d'un véhicule automobile doté d'un moteur à combustion interne pour déplacer un levier de changement de vitesse dans la boîte de vitesses, comprenant une tige de pression (11) déplaçable de manière pneumatique ou hydraulique dans un carter (10), la tige de pression (11) étant associée à un premier piston (14) ayant au moins une chambre de travail (16) pouvant être alimentée par voie pneumatique ou hydraulique, la tige de pression (11) présentant un deuxième piston (32, 57) qui peut être déplacé dans une chambre de pression (37, 59), la chambre de pression (37, 59) étant remplie avec un milieu incompressible et présentant un orifice destiné à l'entrée et à la sortie du milieu incompressible, dans lequel l'orifice ou une conduite raccordée (36, 60) est associé (e) à une soupape (34, 64) à commande électrique, dans lequel le deuxième piston (32, 57) et la chambre de pression (37, 59) font partie d'une unité externe (30, 55) présentant un carter supplémentaire (33, 66), le carter supplémentaire (33, 66) étant relié au carter (10) pour la tige de pression (11), la tige de pression (11) présentant approximativement au centre sur le côté un évidement (19) comme interface pour une transmission de force à la boîte de vitesses.

2. Dispositif d'entraînement linéaire selon la revendication 1, **caractérisé par** des moyens pour une détermination directe ou indirecte de la position de la tige de pression (11).

3. Dispositif d'entraînement linéaire selon la revendication 1 ou 2, **caractérisé en ce que** l'orifice est associé à une conduite (36, 60) et **en ce que** la conduite est associée à un débitmètre (35, 65).

4. Dispositif d'entraînement linéaire selon la revendication 3, **caractérisé en ce que** le débitmètre (35, 65) est le moyen de détermination indirecte de la position de la tige de pression (11).

5. Dispositif d'entraînement linéaire selon la revendication 1 ou l'une des autres revendications, **caractérisé en ce que** la tige de pression (11) ou un composant relié à celle-ci est associé (e) à un capteur pour déterminer la position.

6. Dispositif d'entraînement linéaire selon la revendication 5, **caractérisé en ce que** le capteur est un capteur (44, 67) à effet inductif/magnétique.

7. Dispositif d'entraînement linéaire selon la revendication 1 ou l'une des autres revendications, **caractérisé en ce que** le deuxième piston est un piston (32, 57) relié à la tige de pression (11), en particulier une tige.

8. Dispositif d'entraînement linéaire selon la revendication 1 ou l'une des autres revendications, **caractérisé en ce que** l'orifice est associé à une conduite (36), la conduite étant reliée à une réserve (31) pour le milieu incompressible.

9. Dispositif d'entraînement linéaire selon la revendication 1 ou l'une des autres revendications, **caractérisé en ce que** la tige de pression (11) est associée à un troisième piston (élargissement 63) et à une chambre de pression supplémentaire (61) avec un milieu incompressible, le troisième piston (élargissement 63) agissant en sens contraire au deuxième piston dans la chambre de pression (61), et la chambre de pression supplémentaire (61) communiquant avec la chambre de pression (59) du deuxième piston par une conduite (60).

10. Dispositif d'entraînement linéaire selon la revendication 9, **caractérisé en ce que** les chambres de pression (59, 61) et les deuxième et troisième pistons font partie d'une unité externe (55) qui est reliée à un carter (10) destiné à la tige de pression (11).

11. Procédé d'actionnement d'un dispositif d'entraînement linéaire selon l'une quelconque des revendications précédentes 1 à 10, **caractérisé en ce que** la chambre de travail (37) est mise sous pression pendant que la soupape (34, 64) associée à la conduite (36, 60) ou à l'orifice de la chambre de pression (37, 59) est fermée, et **en ce que** seulement ensuite, la soupape (34, 64) est pilotée pour laisser s'écouler le milieu incompressible dans la chambre de pression ou hors de la chambre de pression et pour commander ainsi le mouvement de la tige de pression (11).

12. Procédé d'actionnement d'un dispositif d'entraînement linéaire selon l'une quelconque des revendications précédentes 1 à 10, **caractérisé en ce que** la soupape (34, 64) associée à l'orifice de la chambre de pression (37, 59) ou à la conduite raccordée (36, 60) est fermée lorsque le dispositif d'entraînement linéaire n'est pas actionné et verrouille ainsi le dispositif d'entraînement linéaire.
